(19) Europäisches Patentamt / European Patent Office / Office européen des brevets

(11) **EP 2 796 896 B1**

(12) **EUROPEAN PATENT SPECIFICATION**

(45) Date of publication and mention
of the grant of the patent:
**10.08.2016  Bulletin 2016/32**

(51) Int Cl.:
*G01S 19/24* *(2010.01)*        *G01S 19/29* *(2010.01)*
*G01S 19/30* *(2010.01)*

(21) Application number: **13290093.7**

(22) Date of filing: **25.04.2013**

(54) **Method and Device for Tracking Signals with at least one Subcarrier**

Verfahren und Vorrichtung zur Verfolgung von Signalen mit mindestens einem Unterträger

Procédé et dispositif de poursuite de signaux avec au moins une sous-porteuse

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.10.2014  Bulletin 2014/44**

(73) Proprietor: **Airbus DS GmbH
82024 Taufkirchen (DE)**

(72) Inventors:
• **Wendel, Jan
  D-81373 München (DE)**
• **Schubert, Frank
  D-81667 München (DE)**
• **Floch, Jean-Jacques
  D-81677 München (DE)**
• **Soualle, Francis
  D-81543 München (DE)**

(74) Representative: **Frenkel, Matthias Alexander
Wuesthoff & Wuesthoff
Patentanwälte PartG mbB
Schweigerstrasse 2
81541 München (DE)**

(56) References cited:
**US-A1- 2003 231 580     US-A1- 2010 104 046
US-A1- 2012 026 035**

• **J-C JUANG ET AL: "Generalized Discriminator
and its Applications in GNSS Signal Tracking",
GNSS 2010 - PROCEEDINGS OF THE 23RD
INTERNATIONAL TECHNICAL MEETING OF THE
SATELLITE DIVISION OF THE INSTITUTE OF
NAVIGATION (ION GNSS 2010), THE INSTITUTE
OF NAVIGATION, 8551 RIXLEW LANE SUITE 360
MANASSAS, VA 20109, USA, 24 September 2010
(2010-09-24), pages 3251-3257, XP056000427,**

EP 2 796 896 B1

**Description**

**Technical Field**

The present document relates to the reception of subcarrier modulated signals, such as Binary Offset Carrier (BOC) modulated signals. In particular, the present document relates to the tracking of subcarrier modulated navigation signals in a Global Navigation Satellite System (GNSS).

**Background**

In next generation GNSS systems, binary offset carrier (BOC) modulation and multiplexed binary offset carrier (MBOC) modulation will be used. Examples for such BOC or MBOC modulated signals are the Galileo E1 open signal, a CBOCc(6,1,1/11) signal (i.e. a composite BOC signal using a cosine subcarrier), the Galileo PRS (Public Regulated Service) signals on E1 and E6, a BOCc(15,2.5) signal and a BOCc(10,5) signal, respectively, and the GPS M-code, which corresponds to a BOC(10,5) signal. In more general terms, the above mentioned signals may be referred to as subcarrier modulated signals. Such subcarrier modulated signals comprise a carrier signal, which is modulated with a pseudo random noise (PRN) code, and which is additionally modulated with one or more subcarriers. Additionally, navigation message data may or may not be modulated onto the carrier signal.

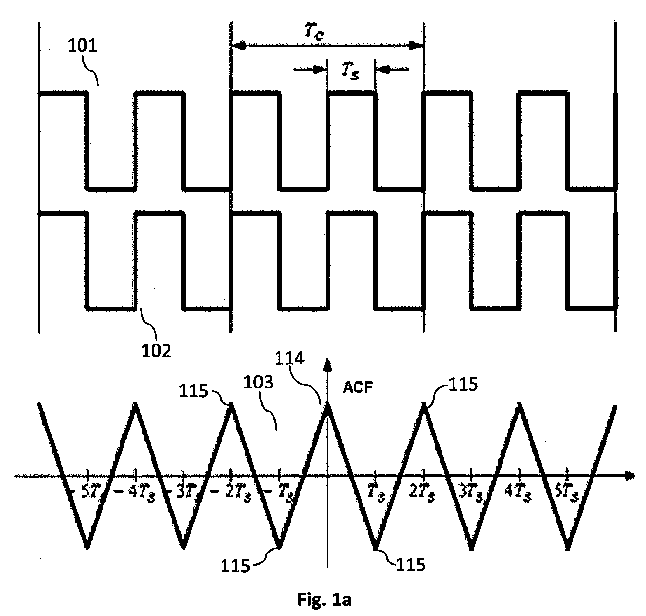

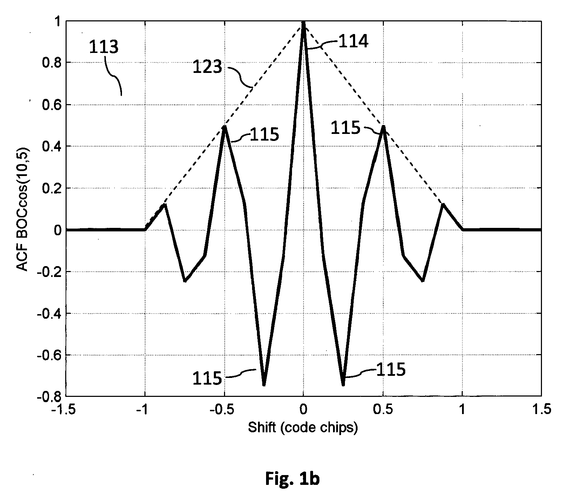

A BOC modulated signal without the subcarrier modulation corresponds to a BPSK (Binary Phase Shift Keying) signal used for GPS SPS (Standard Positioning System), which exhibits a triangular autocorrelation function. Fig. 1 a shows an example subcarrier signal 101, 102 having a subcarrier symbol duration $T_s = \frac{1}{2f_s}$, wherein $f_s$ is the subcarrier rate. Fig. 1a also illustrates the symbol duration $T_c = \frac{1}{f_c}$ of a symbol of the PRN code (wherein $f_c$ is the code rate), yet the PRN code signal itself is not shown in this figure. In the illustrated example, the subcarrier rate $f_s$ is twice as high as the code rate $f_c$ and the resulting BOC signal is referred to as a BOC(2m,m) signal (based on the notation BOC(m,n) where the respective frequencies are given by $f_s = m \cdot 1.023\text{MHz}$, $f_c = n \cdot 1.023\text{MHz}$). The code rate $f_c$ may also be referred to as the chip rate and a symbol of the PRN code (having a code symbol duration $T_c$) may be referred to as a chip. The subcarrier 101, 102 itself has a saw-tooth like autocorrelation function 103 as shown in FIG. 1a. The autocorrelation function 113 of a BOC signal is approximately given by the multiplication of a triangular PRN-code autocorrelation function 123 with the subcarrier autocorrelation function 103. Therefore, this autocorrelation function 113 has multiple peaks as shown in FIG. 1b.

The autocorrelation function 113 which exhibits multiple peaks has advantages and disadvantages: The main peak 114 of the autocorrelation function 113 is significantly narrower than the single peak of the autocorrelation function 123 of the corresponding BPSK signal. This offers the potential for an increased tracking accuracy, i.e. less code jitter, and a better multipath performance. In particular, this may be used for determining (i.e. for tracking) a transmission delay of the BOC signals with increased accuracy. The transmission delay of the BOC signal may then be used for determining the position of a GNSS receiver.

On the other hand, a tracking loop may lock to a side peak 115 instead of the main peak 114. If the locking to a side peak 115 is not recognized and corrected, systematic errors in the pseudo-range measurements occur, which in turn lead to position errors. For a BOCcos(15,2.5) (also referred to as BOCc(15,2.5)) modulated signal, i.e. a BOC modulated signal using a subcarrier which is phase shifted by 90 degrees with respect to the PRN code, a false lock to the first side peak 115 leads to a pseudo-range error of approximately 10 meter, and for a BOCcos(10,5) modulated signal, this error is approximately 15 meter. However, it is also possible that a tracking loop locks to a side peak 115 further away from the main peak 114, such that the resulting error is a multiple of the error for a false lock to the first side peak 115.

Different techniques have been described for tracking BOC modulated signals, e.g. bump jumping, a Sidelobe Cancellation Method, BPSK-like techniques, a Multiple Gate Delay discriminator, and a Double Estimator technique. These techniques have various drawbacks such as increased computational complexity and/or increased waiting times for determining a reliable delay (and position) estimate.

US2010/104046A1 relates to the reception of Binary Offset Carrier (BOC) modulated signals and similar such signals, particularly in a Global Navigation Satellite System (GNSS). In order to eliminate the difficulty with BOC called 'false lock' where early/late gates settle on the wrong peak of the multi-peaked correlation function, it is proposed to eliminate that correlation. Instead, a two dimensional correlation is tracked independently to realize a dual estimate. An unambiguous lower accuracy estimate derived from the code phase is used to make an integer correction to a higher accuracy but ambiguous independent estimate based on the sub-carrier phase.

In the present document an alternative tracking method (and a corresponding tacking system) for subcarrier modulated signals, such as BOC, MBOC and/or CBOC signals, is described. The described method and system fully exploit the subcarrier accuracy, while reliably resolving the subcarrier ambiguity. Furthermore, the described method and system may be implemented at reduced computational complexity compared to known tracking methods, thereby reducing hardware costs.

**Summary**

According to an aspect, a system configured to determine a delay estimate $\hat{\tau}$ of a delay incurred by a navigation signal is described. The navigation signal may have been transmitted by a transmitter which is located e.g. within a satellite. It should be noted, however, that the system and method described in the present document are also applicable to the determination of delay estimates of other navigation signals (e.g. terrestrial based navigation signals). On the transmission path between the transmitter and the receiving system, the navigation signal may have incurred a delay $\tau$, and the receiving system is configured to estimate this delay $\tau$, e.g. in order to determine the position of the receiving system.

The system may comprise a radio frequency (RF) receiver configured to receive an RF signal, an analog-to-digital (ADC) converter configured to convert the received RF signal from the analog domain into the digital domain, and a down-converter configured to transpose the received RF signal from a transmission frequency range into a reduced intermediate frequency (IF) range or into a baseband frequency range. As such, the navigation signal may correspond to a down-converted, digital version of the received RF signal. In other words, the navigation signal may be indicative of the received signal down-converted into a baseband or to an intermediate frequency. The navigation signal may comprise a sequence of complex samples.

The navigation signal may be indicative of a carrier signal modulated with a code signal and modulated with a subcarrier signal. In particular, the navigation signal may be indicative of a phase $\varphi$ of the carrier signal. The navigation signal is also referred to in the present document as the input signal to the system. The code signal may have a code rate $f_c$ and a code symbol duration $T_c = 1/f_c$. The subcarrier signal may have a subcarrier rate $f_s$ and a subcarrier symbol duration $T_s = 1/(2f_s)$. The subcarrier rate $f_s$ may be higher than the code rate $f_c$. The carrier signal may be phase modulated with the code signal and with the subcarrier signal. In an example, the code signal and the subcarrier signal form a binary offset carrier (BOC) or a multiplexed BOC (MBOC) or a composite BOC (CBOC), such that the navigation signal is indicative of a BOC, MBOC or CBOC modulated carrier signal.

The system comprises an Early-Late signal generation unit configured to generate an EP signal, a LP signal, a PE signal and a PL signal based on the code signal, based on the subcarrier signal and based on a first delay estimate $\tilde{\tau}$. In particular, the EP signal, the LP signal, the PE signal and the PL signal may be generated based on a replica of the code signal and based on a replica of the subcarrier signal. The Early-Late signal generation unit (also referred to herein as the second oscillator unit) may be implemented as or may comprise a numerically controlled oscillator (NCO). In particular, the Early-Late signal generation unit may comprise a single NCO configured to jointly generate the above mentioned signals. In other words, the Early-Late signal generation unit may be configured to generate the EP signal, the LP signal, the PE signal and the PL signal (as well as a PP signal described below) based on a single and/or unique delay estimate (i.e. based on the first delay estimate $\tilde{\tau}$). As such, the code signal component and the subcarrier signal component comprised within the EP signal, the LP signal, the PE signal, the PP signal and the PL signal, respectively, may have a fixed phase or delay relationship with respect to one another. As outlined below, this fixed phase or delay relationship may be given by a fixed separation time.

The EP signal, the LP signal, the PE signal and the PL signal may also be referred to as replicas, as they may be viewed as being replicas (or shifted replicas) of the modulating signal used to modulate the carrier signal at the corresponding transmitter. The first delay estimate $\tilde{\tau}$ may also be referred to as an ambiguous delay estimate, because the first delay estimate $\tilde{\tau}$ may be indicative of the delay $\tau$ of the navigation signal, apart from a delay offset which may take on a pre-determined number of discrete and/or equally spaced values. In particular, the delay offset may correspond to an integer multiple of the symbol duration $T_s$ of the subcarrier signal.

The EP signal may be generated based on the code signal delayed by the first delay estimate $\tilde{\tau}$, and based on the subcarrier signal delayed by the first delay estimate $\tilde{\tau}$ and advanced by a first subcarrier separation time. In particular, the EP signal may be generated by modulating the subcarrier signal, which has been delayed by the first delay estimate $\tilde{\tau}$ and advanced by the first subcarrier separation time, with the code signal, which has been delayed by the first delay estimate $\tilde{\tau}$.

The LP signal may be generated based on the code signal delayed by the first delay estimate $\tilde{\tau}$, and based on the subcarrier signal delayed by the first delay estimate i and further delayed by a second subcarrier separation time. In particular, the LP signal may be generated by modulating the subcarrier signal, which has been delayed by the first delay estimate $\tilde{\tau}$ and further delayed by the second subcarrier separation time, with the code signal, which has been delayed by the first delay estimate $\tilde{\tau}$.

The PE signal may be generated based on the code signal delayed by the first delay estimate $\tilde{\tau}$ and advanced by a first code separation time, and based on the subcarrier signal delayed by the first delay estimate $\tilde{\tau}$. In particular, the PE signal may be generated by modulating the subcarrier signal, which has been delayed by the first delay estimate $\tilde{\tau}$, with the code signal, which has been delayed by the first delay estimate $\tilde{\tau}$ and which has been advanced by the first code separation time.

The PL signal may be generated based on the code signal delayed by the first delay estimate $\tilde{\tau}$ and delayed by a second code separation time, and the subcarrier signal delayed by the first delay estimate $\tilde{\tau}$. In particular, the PL signal may be generated by modulating the subcarrier signal, which has been delayed by the first delay estimate $\tilde{\tau}$, with the code signal, which has been delayed by the first delay estimate $\tilde{\tau}$ and which has been further delayed by the second code separation time.

**Table 1**

|  | EP signal | LP signal | PP signal | PE signal | PL signal |
|---|---|---|---|---|---|
| code signal | $\tilde{\tau}$ | $\tilde{\tau}$ | $\tilde{\tau}$ | $\tilde{\tau} - T_{C1}$ | $i + T_{C2}$ |
| subcarrier signal | $\tilde{\tau} - T_{S1}$ | $\tilde{\tau} + T_{S2}$ | $\tilde{\tau}$ | $\tilde{\tau}$ | $\tilde{\tau}$ |

Table 1 provides an overview of example delays applied to the code signal and/or to the subcarrier signal for generating the EP signal, the LP signal, the PE signal, the PP signal and/or the PL signal, respectively. $T_{S1}$ corresponds to the first subcarrier separation time, $T_{S2}$ corresponds to the second subcarrier separation time, $T_{C1}$ corresponds to the first code separation time, and $T_{C2}$ corresponds to the second code separation time. In can be seen that the phase or delay difference between the code signal and the subcarrier signal component within the EP signal, the LP signal, the PE signal, the PP signal and/or the PL signal, respectively, is either zero (for the PP signal) or given by one of the fixed separation times. The phase or delay difference does not vary or fluctuate.

The sum of the first and second code separation times is typically smaller than the symbol duration $T_C$ of the code signal. Furthermore, the first and second code separation times may be equal. In a similar manner, the sum of the first and second subcarrier separation times is typically smaller than the symbol duration $T_S$ of the subcarrier signal. Furthermore, the first and second subcarrier separation times may be equal.

As indicated above, the Early-Late signal generation unit may be further configured to generate a PP signal based on the code signal, based on the subcarrier signal and based on the first delay estimate $\tilde{\tau}$. The PP signal may be generated based on the code signal delayed by the first delay estimate $\tilde{\tau}$, and based on the subcarrier signal delayed by the first delay estimate $\tilde{\tau}$. In particular, the PP signal may be generated by modulating the subcarrier signal, which has been delayed by the first delay estimate $\tilde{\tau}$, with the code signal, which has been delayed by the first delay estimate $\tilde{\tau}$.

Furthermore, the system may comprise a carrier locked loop (also referred to as the first loop) configured to estimate a phase of the carrier signal component comprised within the received navigation signal. The estimated phase may be used to determine a received modulating signal based on the received navigation signal and based on the PP signal. In particular, the carrier locked loop may be configured to "wipe off' (e.g. to eliminate) the carrier signal (and in particular the carrier phase) from the navigation signal, to provide the received modulating signal which is indicative of an overlay of the delayed code signal and the delayed subcarrier signal.

The system comprises a delay locked loop (also referred to as the second loop or the subcarrier loop) configured to determine the first delay estimate $\tilde{\tau}$ based on the received navigation signal, the EP signal and the LP signal. The delay locked loop may comprise an early subcarrier correlation unit configured to determine an early subcarrier correlation at an early subcarrier gate, based on the received modulating signal derived from the received navigation signal and based on the EP signal. For this purpose, the early subcarrier correlation unit may comprise an EP multiplying unit configured to multiply the received modulating signal with the EP signal. In particular, the EP multiplying unit may be configured to "wipe off" the code signal from the received modulating signal. Furthermore, the early subcarrier correlation unit may comprise an EP integration unit configured to sum up a plurality of samples of the output of the EP multiplying unit. The early subcarrier correlation at the early subcarrier gate may be indicative of a value of the autocorrelation function of the subcarrier signal at an early gate (referred to as the early subcarrier gate).

It should be noted that gates typically refer to lags of the autocorrelation function. In case of a correct first delay estimate $\tilde{\tau}$, a center gate may correspond to the lag for which the autocorrelation function exhibits a peak, the early gate may correspond to a lag which is smaller than the lag for which the autocorrelation function exhibits a peak, and a late gate may correspond to a lag which is greater than the lag for which the autocorrelation function exhibits a peak.

Furthermore, the delay locked loop may comprise a late subcarrier correlation unit configured to determine a late subcarrier correlation at a late subcarrier gate, based on the received modulating signal and based on the LP signal. For this purpose, the late subcarrier correlation unit may comprise a LP multiplying unit configured to multiply the received modulating signal with the LP signal. In particular, the LP multiplying unit may be configured to "wipe off' the code signal from the received modulating signal. Furthermore, the late subcarrier correlation unit may comprise an LP integration unit configured to sum up a plurality of samples of the output of the LP multiplying unit. The late subcarrier correlation at the late subcarrier gate may be indicative of a value of the autocorrelation function of the subcarrier signal at a late gate (referred to as the late subcarrier gate).

In addition, the delay locked loop may comprise a subcarrier Early-Late discrimination unit configured to determine the first delay estimate $\tilde{\tau}$ based on the early subcarrier correlation at the early subcarrier gate, based on the late subcarrier correlation at the late subcarrier gate, and based on the pre-determined autocorrelation function of the subcarrier signal. In particular, the subcarrier Early-Late discrimination unit may be configured to determine the location of the early subcarrier gate and the location of late subcarrier gate with respect to a nearest peak of the pre-determined autocorrelation function of the subcarrier signal (using the early subcarrier correlation and the late subcarrier correlation). Typically, the autocorrelation function of the subcarrier signal comprises a plurality of peaks, thereby rendering the first delay estimate $\tilde{\tau}$ ambiguous, as the delay locked loop may lock to different ones of the plurality of peaks. In particular, the delay locked loop may be configured to lock to the peak of the pre-determined autocorrelation function which is nearest to the locations of the early subcarrier gate and the late subcarrier gate, to provide the first delay estimate $\tilde{\tau}$.

The subcarrier Early-Late discrimination unit may be configured to pass the first delay estimate $\tilde{\tau}$ (possibly subsequent to filtering) to the Early-Late signal generation unit, wherein the Early-Late signal generation unit is configured to use the first delay estimate $\tilde{\tau}$ to generate the EP, LP, PP, PE, PL signals. As such, the delay locked loop is a closed loop which may comprise the Early-Late signal generation unit, the early subcarrier correlation unit, the late subcarrier correlation unit and the subcarrier Early-Late discrimination unit. The first delay estimate $\tilde{\tau}$ may be continuously (or regularly or periodically) updated by the subcarrier Early-Late discrimination unit and the updated first delay estimate $\tilde{\tau}$ may be continuously (or regularly or periodically) provided to the Early-Late signal generation unit. As such, the Early-Late signal generation unit may continuously update the EP, LP, PP, PE, PL signals using the continuously updated first delay estimate $\tilde{\tau}$.

Furthermore, the system comprises a detection path configured to determine a delay offset based on the received navigation signal, the PE signal and the PL signal. The detection path is typically not implemented as a loop or closed loop. In particular, the detection path typically does not provide a continuous (or regular or periodic) feedback to the Early-Late signal generation unit.

The detection path may comprise an early code correlation unit configured to determine an early code correlation at an early code gate, based on the received modulating signal derived from the received navigation signal, and based on the PE signal. For this purpose, the early code correlation unit may comprise a PE multiplying unit configured to multiply the received modulating signal with the PE signal. In particular, the PE multiplying unit may be configured to "wipe off" or eliminate the subcarrier signal from the received modulating signal. Furthermore, the early code correlation unit may comprise a PE integration unit configured to sum up a plurality of samples of the output of the PE multiplying unit. The early code correlation at the early code gate may be indicative of a value of the autocorrelation function of the code signal at an early gate (referred to as the early code gate).

Furthermore, the detection path may comprise a late code correlation unit configured to determine a late code correlation at a late code gate, based on the received modulating signal and based on the PL signal. For this purpose, the late code correlation unit may comprise a PL multiplying unit configured to multiply the received modulating signal with the PL signal. In particular, the PL multiplying unit may be configured to "wipe off" the subcarrier signal from the received modulating signal. Furthermore, the late code correlation unit may comprise a PL integration unit configured to sum up a plurality of samples of the output of the PL multiplying unit. The late code correlation at the late code gate may be indicative of a value of the autocorrelation function of the code signal at a late gate (referred to as the late code gate).

In addition, the detection path may comprise a code Early-Late discrimination unit configured to determine a detection signal based on the early code correlation at the early code gate, based on the late code correlation at the late code gate, and based on a pre-determined autocorrelation function of the code signal. In particular, the code Early-Late discrimination unit may be configured to determine the location of the early code gate and the location of late code gate with respect to a peak of the pre-determined autocorrelation function of the code signal (using the early code correlation and the late code correlation). Typically, the autocorrelation function of the code signal only has a single peak, thereby rendering the overall delay estimate $\hat{\tau}$ provided by the system unambiguous. The location of the early code gate and the location of late code gate may be used to determine the detection signal which is indicative of the delay offset. By way of example, the detection signal may be determined based on the distance of the center location between the location of the early code gate and the location of late code gate from the peak of the autocorrelation function of the code signal.

The detection path may further comprise a detection unit configured to determine the delay offset based on the detection signal. In particular, the detection unit may be configured to determine the delay offset based on a mean value of the detection signal. The mean value may be determined using e.g. a low pass filter. The detection unit may be configured to compare the mean value of the detection signal (or a scaled or proportional version thereof) with multiples of the subcarrier symbol duration $T_S$, i.e. $nT_S$, $n$ being an integer. The delay offset (or a scaled or proportional version thereof) may correspond to the multiple of the subcarrier symbol duration $nT_S$ which is nearest to the mean value of the detection signal.

The system may be configured to determine the delay estimate $\hat{\tau}$ based on the first delay estimate $\tilde{\tau}$ and based on the delay offset. In particular, the system may be configured to determine the delay estimate $\hat{\tau}$ based on the sum of the first delay estimate $\tilde{\tau}$ and the delay offset, or a difference of these depending on how the sign of the delay offset is defined.

As such, the system may be configured to unambiguously determine the delay estimate $\hat{\tau}$ using a single delay locked loop for determining the single first delay estimate $\tilde{\tau}$. The use of only a single delay locked loop increases the robustness and the convergence speed of the system. Furthermore, by providing only a single delay locked loop, the complexity and cost of the system may be reduced.

As outlined above, the detection path (and in particular, the code Early-Late discrimination unit or the detection unit) does not provide a continuous feedback regarding the delay offset to the Early-Late signal generation unit. Nevertheless, the detection path may provide the delay offset to the Early-Late signal generation unit at a distinct time instant (e.g. at a distinct time instant subsequent to convergence of the delay locked loop). By way of example, the detection path may provide the delay offset to the Early-Late signal generation unit only once, e.g. subsequent to convergence of the delay locked loop. As such, the Early-Late signal generation unit may be configured to receive the delay offset from the detection path and to offset the first delay estimate $\tilde{\tau}$ by the delay offset. By doing so, it is ensured that the first delay estimate $\tilde{\tau}$ corresponds to the delay estimate $\hat{\tau}$ and that the mean value of the detection signal is substantially zero. Subsequent to offsetting the first delay estimate $\tilde{\tau}$ to provide an offset first delay estimate $\tilde{\tau}$, the Early-Late signal generation unit may be configured to generate the EP signal, the LP signal, the PE signal and the PL signal (as well as the PP signal) based on the offset first delay estimate $\tilde{\tau}$.

As already indicated, the system may comprise a carrier locked loop configured to determine the phase $\varphi$ of the carrier signal and configured to "wipe off" the carrier signal from the navigation signal to generate the received modulating signal. The carrier locked loop may be implemented as a phase locked loop (PLL) and/or as a frequency locked loop (FLL). The carrier locked loop may comprise a carrier correlation unit configured to determine a carrier correlation at a center gate, based on the received modulating signal and based on the PP signal. The carrier correlation unit may comprise a PP multiplying unit configured to multiply the received modulating signal with the PP signal, and configured to "wipe off" the code signal and the subcarrier signal from the received modulating signal, thereby providing an indication of the residual of the carrier signal comprised within the received modulating signal. Furthermore, the carrier correlation unit may comprise a PP integration unit configured to sum up a plurality of samples of the output of the PP multiplying unit to provide the carrier correlation.

Furthermore, the carrier locked loop may comprise a phase detector unit configured to determine an estimate of the phase $\varphi$ of the carrier signal based on the carrier correlation at the center gate. In addition, the carrier locked loop may comprise a carrier compensation unit configured to determine the received modulating signal based on the received navigation signal and based on the estimate of the phase $\varphi$ of the carrier signal. The carrier compensation unit may comprise a first oscillator unit (comprising e.g. a NCO) configured to generate a reference signal having substantially the same IF or baseband frequency as the carrier signal component comprised within the navigation signal and exhibiting the estimated phase. Furthermore, the carrier compensation unit may comprise a multiplying unit configured to multiply the received navigation signal with the reference signal to provide the received modulating signal.

The subcarrier signal may be generated by combining a plurality of constituent subcarrier signals at different subcarrier rates and at different power levels. In other words, the subcarrier signal may be generated by combining or multiplexing a plurality of subcarriers (as is the case e.g. for CBOC and MBOC). The Early-Late signal generation unit may be configured to determine the EP signal, the LP signal, the PE signal and the PL signal (as well as the PP signal, if present) based on the constituent subcarrier signal having the highest power level among the plurality of constituent subcarrier signals. This is particular useful for subcarrier signals having a single pre-dominant constituent subcarrier (as is the case e.g. for 10/11 BOC(1,1) + 1/11 BOC(6,1) used in Galileo). By doing this, the complexity of the system can be reduced, even when using combined subcarriers or multiplexed subcarriers.

It should be noted that the first delay estimate and/or the detection signal may be determined by one or more discriminators which are different from an Early-Late discrimination unit. Such one or more discriminators may or may not make use of other types of replica signals. An example for such a different type of discriminator is a double detector which makes use of two additional replica signals.

According to a further aspect, a method for determining a delay estimate $\hat{\tau}$ of a delay incurred by a navigation signal is described. As outlined above, the navigation signal may be indicative of a carrier signal modulated with a code signal and modulated with a subcarrier signal. The method comprises generating an EP signal based on the code signal delayed by a first delay estimate $\tilde{\tau}$, and based on the subcarrier signal delayed by the first delay estimate $\tilde{\tau}$ and advanced by a first subcarrier separation time. Furthermore, the method comprises generating a LP signal based on the code signal delayed by the first delay estimate $\tilde{\tau}$, and based on the subcarrier signal delayed by the first delay estimate $\tilde{\tau}$ and delayed by a second subcarrier separation time. In addition, the method comprises generating a PE signal based on the code signal delayed by the first delay estimate $\tilde{\tau}$ and advanced by a first code separation time, and based on the subcarrier signal delayed by the first delay estimate $\tilde{\tau}$. Furthermore, the method comprises generating a PL signal based on the code signal delayed by the first delay estimate $\tilde{\tau}$ and delayed by a second code separation time, and based on the subcarrier signal delayed by the first delay estimate $\tilde{\tau}$.

The first delay estimate $\tilde{\tau}$ may be determined based on the received navigation signal, the EP signal and the LP signal. Furthermore, a delay offset may be determined based on the received navigation signal, the PE signal and the PL signal. As such, the method may further comprise determining the delay estimate $\hat{\tau}$ based on the first delay estimate $\tilde{\tau}$ and based on the delay offset.

According to a further aspect, a software program is described. The software program is adapted for execution on a processor and for performing the method steps outlined in the present document when carried out on the processor.

According to another aspect, a storage medium is described. The storage medium comprises a software program adapted for execution on a processor and for performing the method steps outlined in the present document when carried out on the processor.

According to a further aspect, a computer program product is described. The computer program comprises executable instructions for performing the method steps outlined in the present document when executed on a computer.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be combined in many different ways. In particular, the features of the claims may be combined with one another in an arbitrary manner.

**Short description of the Figures**

The invention is explained below in an exemplary manner with reference to the accompanying drawings, wherein

Fig. 1a shows an autocorrelation function of an example subcarrier used for modulating a carrier signal;
Fig. 1b shows an autocorrelation function of an example subcarrier modulated signal;
Fig. 2 shows a block diagram of an example system for tracking a subcarrier modulated signal;
Fig. 3 shows example replica signals used by the tracking system of Fig. 2 and
Fig. 4 shows a flow chart of an example method for tracking a subcarrier modulated signal.

**Detailed Description**

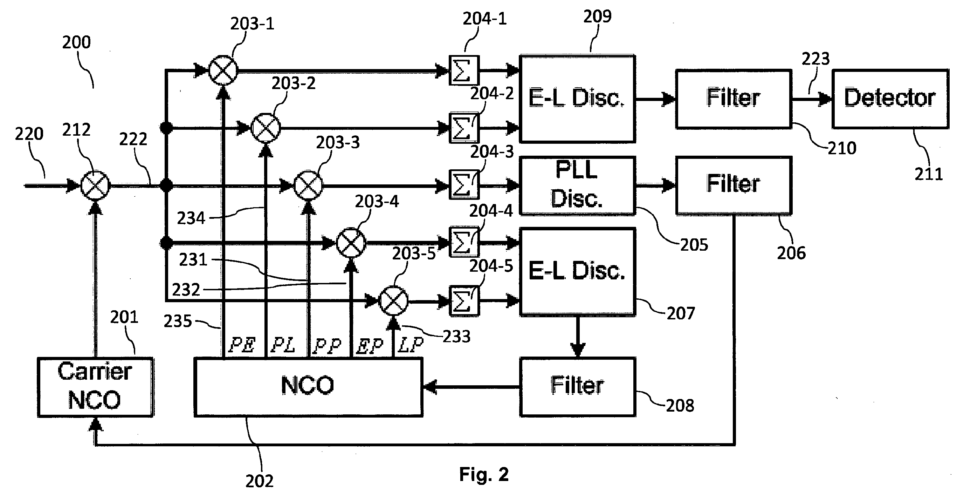

As outlined in the background section, the present document relates to a method and a system for tracking a subcarrier modulated signal, and in particular for estimating a propagation delay of the subcarrier modulated signal. Fig. 2 shows a block diagram of an example tracking system 200. For sake of simplicity, Fig. 2 does not show means for navigation message demodulation and decoding, as well as a RF (radio frequency) front-end and an ADC (analogue-to-digital converter). The signals of Fig. 2 are to be understood as complex baseband signals, meaning that the received signal 220 is assumed to be down-converted into the baseband. It should be noted, however, that the system 200 may operate at intermediate frequencies (IF) or directly at RF in a similar manner.

The tracking system 200 employs two independent but cooperative feedback loops. A first loop is used for carrier tracking, i.e. for the locking to the phase and frequency of the carrier signal. The first loop may make use of PLL (phase lock loop) and/or FLL (frequency lock loop) techniques. The first loop of system 200 comprises a PLL discrimination unit 205, a first filter unit 206 and a first oscillator unit 201 (comprising e.g. a numerically controlled oscillator, NCO). Furthermore, the tracking system 200 makes use of a second loop which is used for subcarrier tracking. Furthermore, the second loop may be used to produce a disambiguation signal 223 that can be filtered and compared to a threshold in order to detect a false lock to a side peak 115 of the autocorrelation function 103. The second loop of system 200 comprises an Early - Late discrimination unit 207, a second filter unit 208 and a second oscillator unit 202 (comprising e.g. a NCO).

It should be noted that a subcarrier modulated signal may further comprise navigation message data. In the following description, such navigation message bits are ignored, as the presence of navigation bits is not relevant for the principle considerations regarding signal tracking. Furthermore, for the sake of simplicity, the effects of noise, dynamics and multipath on the tracking loop are also not included in the following discussion.

The tracking of a BPSK modulated signal may be performed using two independent but cooperative loops, wherein the first loop is used for tracking the carrier (e.g. based on a phase lock loop (PLL) or a frequency lock loop (FLL)). The second loop may be used for tracking the code (e.g. using a delay lock loop (DLL)).

The tracking system 200 shown in FIG. 2 is designed for tracking subcarrier modulated signals, such as BOC and/or CBOC modulated signals. The received signal 220 $u(t)$ may be denoted as

$$u(t) = \exp(j\omega t + \varphi) \times s(t - \tau) \times a(t - \tau),$$

wherein $\omega$ is the intermediate (or baseband) frequency, $\varphi$ is the unknown phase of the carrier signal, $s(t - \tau)$ is the subcarrier signal 101 delayed by the transmission delay $\tau$ and $a(t - \tau)$ is the code (also referred to as code signal) delayed by the transmission delay $\tau$. The system 200 is configured to track the transmission delay $\tau$, i.e. to determine an estimate $\hat{\tau}$ of the transmission delay $\tau$. However, instead of performing DLL tracking of the PRN code $a(t)$, the second loop of system 200 is closed by tracking the subcarrier $s(t)$ (also referred to as subcarrier signal). This may be achieved using the second oscillator unit 202 which is configured to generate e.g. five replicas of the subcarrier modulated signal.

The replicas of the subcarrier modulated signal may be denoted with PE, PL, PP, EP, and LP. The replicas may be composed as follows:

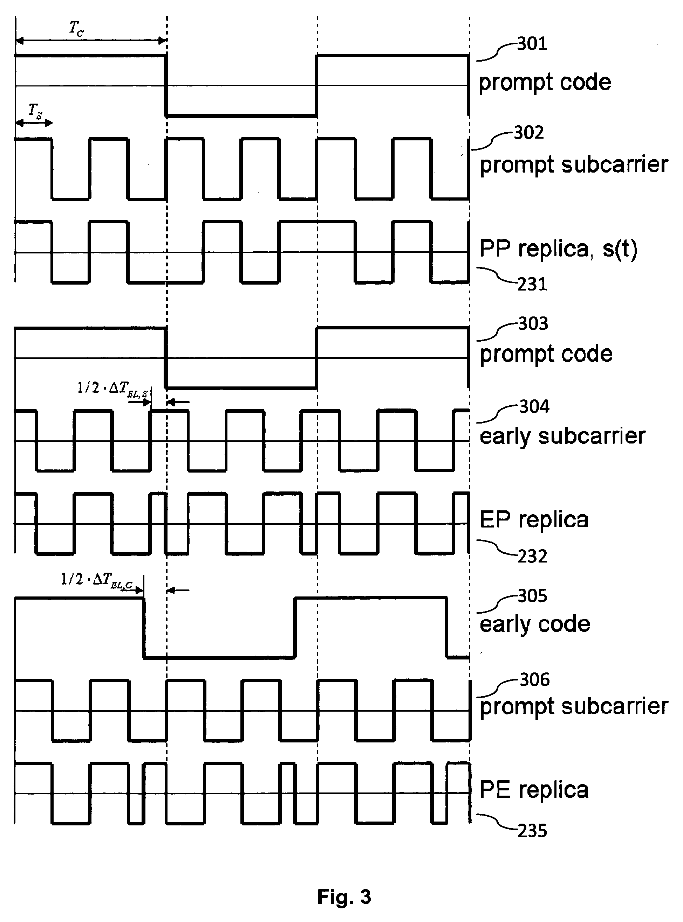

- The PP replica 231 may comprise a prompt subcarrier s(t) 302 and a prompt code $a(t)$ 301, as shown in Fig. 3 for the case of a BOC(2m,m) signal. The phase relationship between the code and the subcarrier in the PP replica 231 corresponds to the phase relationship of the originally transmitted combination of subcarrier and code $s(t) \times a(t)$. The originally transmitted combination of subcarrier and code $s(t) \times a(t)$ typically differs from the subcarrier and code comprised within the received signal $u(t)$ 220 only by the transmission delay $\tau$ incurred on the transmission path. As will be outlined in the following, the system 200 is configured to determine a delay estimate $\hat{\tau}$. In particular, the second loop of the system 200 is configured to determine an ambiguous delay estimate $\tilde{\tau} = \hat{\tau} - nT_S$. The second oscillator unit 202 is configured to determine a PP replica 231 $s(t - \tilde{\tau}) \times a(t - \tilde{\tau})$, which reflects the ambiguous delay estimate.

- The EP replica 232 may comprise an early subcarrier 304 and a prompt code 303. The early subcarrier 304 may be obtained by shifting the subcarrier ahead using a pre-determined subcarrier time separation $\Delta_{TEL,S}$. In particular, the early subcarrier 304 may be obtained by shifting forward (or advancing) the subcarrier by $\frac{1}{2}\Delta T_{EL,S}$. As such, the second oscillator unit 202 is configured to determine an EP replica 232 $s\left(t - \tilde{\tau} + \frac{1}{2}\Delta T_{EL,S}\right) \times a(t - \tilde{\tau})$.

- The LP replica 233 may comprise a late subcarrier and a prompt code. The late subcarrier may be obtained by shifting backwards (or delaying) the subcarrier by $-\frac{1}{2}\Delta T_{EL,S}$. As such, the second oscillator unit 202 is configured to determine a LP replica 233 $s\left(t - \tilde{\tau} - \frac{1}{2}\Delta T_{EL,S}\right) \times a(t - \tilde{\tau})$.

- The PE replica 235 may comprise a prompt subcarrier 306 and an early code 305. The early code 305 may be obtained by shifting the code using a pre-determined code time separation $\Delta_{TEL,C}$. In particular, the early code 305 may be obtained by shifting the code by $\frac{1}{2}\Delta T_{EL,C}$. As such, the second oscillator unit 202 is configured to determine an PE replica 235 $s(t - \tilde{\tau}) \times a\left(t - \tilde{\tau} + \frac{1}{2}\Delta T_{EL,C}\right)$.

- The PL replica 234 may comprise a prompt subcarrier and a late code. The late code may be obtained by shifting the code by $-\frac{1}{2}\Delta T_{EL,C}$. As such, the second oscillator unit 202 is configured to determine an PL replica 234 $s(t - \tilde{\tau}) \times a\left(t - \tilde{\tau} - \frac{1}{2}\Delta T_{EL,C}\right)$.

Hence, ignoring the tracking jitter, the PP replica 231 $s(t - \tilde{\tau}) \times a(t - \tilde{\tau})$ comprises a subcarrier and PRN code, which are both aligned with the subcarrier and code components of the received signal u(t) 220. For the EP replica 232, the subcarrier is advanced by half of the subcarrier time separation $\frac{1}{2}\Delta T_{EL,S}$ compared to a subcarrier aligned with the subcarrier of the received signal $u(t)$ 220, while the code is still aligned with the code of the received signal $u(t)$ 220. For the PE replica 235, the code is advanced by half of the code time separation $\frac{1}{2}\Delta T_{EL,C}$ compared to a code aligned with the code of the received signal u(t) 220, while the subcarrier is still aligned with the subcarrier of the received signal u(t) 220. The construction of the PP, EP, and PE replicas 231, 232, 235 is illustrated in FIG. 3. The construction of the LP and PL replicas 233, 234 is achieved by delaying subcarrier and code, respectively, compared to the subcarrier and code components, respectively, of the received signal u(t) 220.

The first loop of the system 200 comprises a PP multiplying unit 203-3 which is configured to multiply the received digital baseband signal $u(t)$ 222 with the PP replica $s(t - \tilde{\tau}) \times a(t - \tilde{\tau})$ 231. In particular, the PP multiplying unit 203-3 is configured to perform a wipe-off of code and subcarrier, so that at the output of the PP multiplying unit 203-3 only the carrier signal $\exp(j\omega t + \varphi)$ remains. Furthermore, the first loop comprises an integration unit 204-3 which is configured to integrate & dump the output signal $\exp(j\omega t + \varphi)$ of the PP multiplying unit 203-3. Subsequently, a PLL discriminator or FLL discriminator unit 205 may be used to estimate the carrier tracking error, which is fed to the PLL/FLL loop filter 206 in order to generate a steering command for the first oscillator unit 201. The first multiplying unit 212 may be configured to multiply the signal generated by the first, oscillator unit 201 with the received signal 220 in order to perform a carrier wipe-off, so that without carrier tracking error at the output of the first multiplying unit 201, only code and subcarrier remain. As such, the first loop of the system 200 may be configured to determine a phase estimate $\tilde{\varphi}$ of the phase $\varphi$ of the carrier signal. In other words, the first loop of the system 200 may be configured to lock onto the phase $\varphi$ of the carrier signal. Furthermore, the first loop of the system 200 may be configured to remove the carrier signal components from the received signal u(t), thereby providing a received modulating signal $v(t) = s(t - \tau) \times a(t - \tau)$ 222. The received modulating signal $v(t)$ 222 is indicative of the overlaid and delayed code $a(t - \tau)$ and subcarrier $s(t - \tau)$.

The second loop comprises the EP multiplying unit 203-4 and the LP multiplying unit 203-5 which are configured to multiply the received modulating signal $v(t)$ 222 after carrier wipe-off with the EP replica

$$s\left(t - \tilde{\tau} + \frac{1}{2}\Delta T_{EL,S}\right) \times a(t - \tilde{\tau}) \quad 232 \text{ and the LP replica } s\left(t - \tilde{\tau} - \frac{1}{2}\Delta T_{EL,S}\right) \times a(t - \tilde{\tau}) \quad 233,\text{ respectively.}$$

As the EP and LP replicas 232, 233 comprise the delayed prompt code $a(t - \tilde{\tau})$, the EP multiplying unit 203-4 and the LP multiplying unit 203-5 are configured to perform a code wipe-off, so that the resulting two signals at the respective outputs of the EP multiplying unit 203-4 and the LP multiplying unit 203-5 can be used in an Early-Late discrimination unit 207 to estimate the subcarrier tracking error $\tilde{\tau}$. For this purpose, the value of the autocorrelation function 103 of the subcarrier at the Early gate (using a integration unit 204-4) and at the Late gate (using an integration unit 204-5) may be determined. The Early-Late discrimination unit 207 may make use of different types of Early-Late discrimination, such as discrimination based on Early-Late power and/or discrimination based on Early-Late power envelope. The output of the Early-Late discrimination unit 207 may be passed to the second loop filter 208, which generates a steering command for the second oscillator unit 202 generating the five replicas described previously, hereby closing the subcarrier loop (i.e. the second loop).

As such, the second loop of the system 200 is configured to determine the ambiguous delay estimate $\tilde{\tau}$ using a Delay Locked Loop (DLL) which exploits the peaks of the autocorrelation function 103 of the subcarrier $s(t)$ 101. Due to the numerous peaks of the autocorrelation function 103, the second loop may lock onto a delay estimate which differs from the actual delay estimate by a multiple n (n being an integer) of the subcarrier symbol duration $T_S$, wherein $nT_S$ may be referred to as a delay offset.

The system 200 may comprise a detection path for determining the delay offset. The detection path may comprise a PE multiplying unit 203-1 and a PL multiplying unit 203-2 which are configured to multiply the received modulating signal $v(t) = s(t - \tau) \times a(t - \tau)$ 222 after carrier wipe-off with the PE replica $s(t - \tilde{\tau}) \times a\left(t - \tilde{\tau} + \frac{1}{2}\Delta T_{EL,C}\right)$ 235 and the PL replicas $s(t - \tilde{\tau}) \times a\left(t - \tilde{\tau} - \frac{1}{2}\Delta T_{EL,C}\right)$ 234, respectively. Due to the fact that the PE and PL replicas 235, 234 comprise the delayed prompt subcarrier $s(t - \tilde{\tau})$, the PE multiplying unit 203-1 and a PL multiplying unit 203-2 are configured to perform a subcarrier wipe-off, so that the resulting two signals at the output of the PE multiplying unit 203-1 and a PL multiplying unit 203-2 are indicative of an early code signal $a\left(t - \tilde{\tau} + \frac{1}{2}\Delta T_{EL,C}\right)$

and a late code signal $a\left(t - \tilde{\tau} - \frac{1}{2}\Delta T_{EL,C}\right)$, respectively. The early code signal may be cumulated in the PE integration unit 204-1 to determine a value of the autocorrelation function 123 of the PRN code at an Early gate. In a similar, the late code signal may be cumulated in the PL integration unit 204-2 to determine a value of the autocorrelation function 123 of the PRN code at a Late gate.

The values of the autocorrelation function 123 at the Early gate and at the Late gate may be fed to an Early-Late code discrimination unit 209 which may make use of various types of Early-Late discrimination schemes. In other words, the Early-Late code discrimination unit 209 may be provided with the value of the autocorrelation function 123 of the code signal at the Early gate and at the Late gate, using the integration units 204-1, 204-2, respectively. Also the prompt value 204-3 may be used additionally. The output of the Early-Late code discrimination unit 209 may be low pass filtered in the filter unit 210 to yield the disambiguation signal 223. The disambiguation signal 223 may be fed to a detection unit 211 which is configured to determine the delay offset.

Given that the subcarrier tracking performed in the second loop is locked onto the main peak 114 of the overall autocorrelation function 113 (i.e. on the center peak of the autocorrelation function 103 of the subcarrier), the disambiguation signal 223 arriving at the detection unit 211 is zero-mean. On the other hand, given that a side peak 115 of the overall autocorrelation function 113 is tracked, the mean of the signal 223 arriving at the detection unit 211 corresponds to the offset of the side peak 115 on which the subcarrier loop is locked with respect to the main peak 114 of the correlation function 113. As can be seen from Fig. 1a, the offset of a side peak and the main peak of the autocorrelation function 103 is a multiple of the subcarrier symbol duration $T_S$. By consequence, the the mean of the signal 223 arriving at the detection unit 211 corresponds to a fixed multiple of the subcarrier symbol duration $T_S$, and therefore corresponds to the delay offset.

In case a lock to a side peak 115 is detected by the detection unit 211 (based on the mean value of the disambiguation signal 223 to the detection unit 211) the following options exist: A correction of the false lock may be performed so that the subcarrier loop (i.e. the second loop) transfers the lock from the side peak 115 to the main peak 114. In other words, the delay offset $nT_s$ which has been determined by the detection unit 211 may be passed to the second oscillator unit 202. The second oscillator unit 202 may be configured to add the delay offset $nT_S$ to the currently used ambiguous delay estimate $\tilde{\tau}$, thereby yielding the disambiguated delay estimate $\hat{\tau}$. As a result, the second oscillator unit 202 (and the second loop) is locked onto the center peak 114 of the autocorrelation function 103. Furthermore, as a result, the disambiguation signal 223 will have a mean value zero.

Alternatively, the pseudo-range measurement provided by the subcarrier loop (i.e. by the second loop) may be corrected accordingly. In other words, the disambiguated delay estimate $\hat{\tau}$ may be obtained by compensating the ambiguous delay estimate $\tilde{\tau}$ which is used by the second oscillator unit 202 with the delay offset $nT_S$ provided by the detection unit 211.

It should be noted that even though the description focused on BOC and BOCc signals, the system 200 may be configured to track other subcarrier modulated signals, e.g. multi-subcarrier modulated signals such as CBOC (composite BOC) signals. For multi-subcarrier signals, the construction of the five replicas PE, PL, PP, EP and LP employs a multiplication of several subcarriers, instead of the multiplication using a single subcarrier when mono-subcarrier signals, such as BOC and BOCc, are tracked. Depending on the relative power levels of the multiple subcarriers, a multi-subcarrier modulated signal may often be tracked like the corresponding mono-subcarrier signal without a significant loss in performance. In this case, the processing may focus on the subcarrier having the highest power level within the multi-carrier modulated signal.

By way of example, a multi-subcarrier modulated signal may comprise a subcarrier signal which is the sum of a plurality of subcarrier signals. The system 200 may be adapted to a multi-subcarrier modulated signal, by replacing the subcarrier signal s(t) with the sum of the plurality of subcarrier signals. Alternatively, the subcarrier signal having the highest amplitude or energy in the plurality of subcarrier signals may be used to determine the replicas.

As such, the system 200 allows for the tracking of mono-subcarrier modulated signal, such as BOC signal, and multi-subcarrier modulated signals, such as MBOC or CBOC signals. The system 200 fully exploits the subcarrier accuracy and allows for a reliable, fast and robust detection and correction of false locks to side peaks 215.

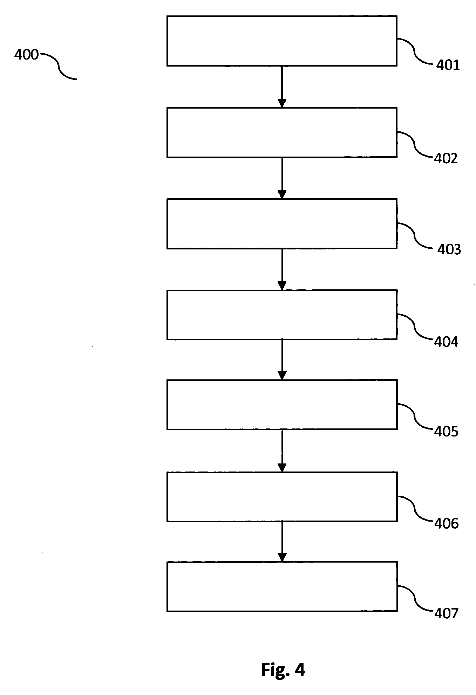

Fig. 4 shows the flow chart of an example method for determining the delay estimate $\hat{\tau}$ of the delay $\tau$ incurred by the input signal 220. The example method 400 comprises generating 401 the EP replica 232 as outlined above. Furthermore, the method comprises generating 402 the LP replica 233 as outlined above. In addition, the method comprises generating 403 the PE replica 235 as outlined above, and generating 404 the PL replica 234 as outlined above. The EP replica, the LP replica, the PE replica and the PL replica may be determined based on the ambiguous delay estimate $\tilde{\tau}$. On the other hand, the method 400 may comprise determining 405 the ambiguous delay estimate $\tilde{\tau}$ based on the input signal 220, the EP signal 232 and the LP signal 233. This may be achieved e.g. using a delay locked loop. In addition, the method comprises determining 406 the delay offset based on the input signal 220, the PE signal 235 and the PL signal 234. The delay estimate $\hat{\tau}$ may then be determined (step 407) based on the ambiguous delay estimate $\tilde{\tau}$ and based on the delay offset.

## Claims

1. A system (200) configured to determine a delay estimate $\hat{\tau}$ of a transmission delay incurred by a navigation signal (220) received at the system (200), wherein the navigation signal (220) is indicative of a carrier signal modulated with a code signal and modulated with a subcarrier signal (101); wherein the system (200) comprises

   - an Early-Late signal generation unit (202) configured to generate an EP signal (232), a LP signal (233), a PE signal (235) and a PL signal (234) based on the code signal, based on the subcarrier signal (101) and based on a first delay estimate $\tilde{\tau}$; wherein

     - the EP signal (232) is generated based on the code signal (303) delayed by the first delay estimate $\tilde{\tau}$, and the subcarrier signal (304) delayed by the first delay estimate $\tilde{\tau}$ and advanced by a first subcarrier separation time;

- the LP signal (233) is generated based on the code signal (303) delayed by the first delay estimate $\tilde{\tau}$, and the subcarrier signal delayed by the first delay estimate $\tilde{\tau}$ and delayed by a second subcarrier separation time;
- the PE signal (235) is generated based on the code signal (305) delayed by the first delay estimate $\tilde{\tau}$ and advanced by a first code separation time, and the subcarrier signal (306) delayed by the first delay estimate $\tilde{\tau}$; and
- the PL signal (234) is generated based on the code signal delayed by the first delay estimate $\tilde{\tau}$ and delayed by a second code separation time, and the subcarrier signal (306) delayed by the first delay estimate $\tilde{\tau}$;

- a delay locked loop (202, 203-4, 203-5, 204-4, 204-5, 207, 208) configured to determine the first delay estimate $\tilde{\tau}$ based on the received navigation signal (220), the EP signal (232) and the LP signal (233); and
- a detection path (202, 203-1, 203-2, 204-1, 204-2, 209, 210 211) configured to determine a delay offset based on the received navigation signal (220), the PE signal (235) and the PL signal (234);

wherein the system (200) is configured to determine the delay estimate $\hat{\tau}$ based on the first delay estimate $\tilde{\tau}$ and based on the delay offset.

2. The system (200) of claim 1, wherein the EP signal (232), the LP signal (233), the PE signal (235) and the PL signal (234) are generated by modulating a delayed and/or advanced code signal with a delayed and/or advanced subcarrier signal.

3. The system (200) of any previous claim, wherein

- the system (200) comprises a carrier compensation unit (201, 202) configured to determine a received modulating signal (222) based on the received navigation signal (220); and
- the received modulating signal (222) is indicative of the code signal and the subcarrier signal (101) comprised within the received navigation signal (220).

4. The system (200) of claim 3, wherein the delay locked loop (202, 203-4, 203-5, 204-4, 204-5, 207, 208) comprises

- an early subcarrier correlation unit (203-4, 204-4) configured to determine an early subcarrier correlation at an early subcarrier gate, based on the received modulating signal (222) and based on the EP signal (232);
- a late subcarrier correlation unit (203-5, 204-5) configured to determine a late subcarrier correlation at a late subcarrier gate, based on the received modulating signal (222) and based on the LP signal (233); and
- a subcarrier Early-Late discrimination unit (207) configured to determine the first delay estimate i based on the early subcarrier correlation at the early subcarrier gate, the late subcarrier correlation at the late subcarrier gate, and based on a pre-determined autocorrelation function (103) of the subcarrier signal (101).

5. The system (200) of any of claims 3 to 4, wherein the detection path (202, 203-1, 203-2, 204-1, 204-2, 209, 210 211) comprises

- an early code correlation unit (203-1, 204-1) configured to determine an early code correlation at an early code gate, based on the received modulating signal (222) and based on the PE signal (235);
- a late code correlation unit (203-2, 204-2) configured to determine a late code correlation at a late code gate, based on the received modulating signal (222) and based on the PL signal (234);
- a code Early-Late discrimination unit (209) configured to determine a detection signal (223) based on the early code correlation at the early code gate, the late code correlation at the late code gate, and based on a pre-determined autocorrelation function (123) of the code signal; and
- a detection unit (211) configured to determined the delay offset based on the detection signal (223).

6. The system (200) of claim 5, wherein the detection unit (211) is configured to determine the delay offset based on a mean value of the detection signal (223).

7. The system (200) of any previous claim, wherein the Early-Late signal generation unit (202) is configured to

- receive the delay offset from the detection path (202, 203-1, 203-2, 204-1, 204-2, 209, 210 211);
- offset the first delay estimate i by the delay offset; and
- generate the EP signal (232), the LP signal (233), the PE signal (235) and the PL signal (234) based on the offset first delay estimate $\tilde{\tau}$.

8. The system (200) of any previous claim, wherein

   - the code signal has a code rate $f_C$ and a symbol duration $T_C = 1/f_C$; and
   - the subcarrier signal has a subcarrier rate $f_S$ and a symbol duration $T_S = 1/2f_S$.

9. The system (200) of claim 8, wherein the delay offset corresponds to a multiple of the symbol duration $T_S$ of the subcarrier signal.

10. The system (200) of any of claims 8 to 9, wherein

    - the sum of the first and second code separation times is smaller than $T_C$;
    - the sum of the first and second subcarrier separation times is smaller than $T_S$;
    - the first and second subcarrier separation times are equal; and/or
    - the first and second code separation times are equal.

11. The system (200) of any of claims 3 to 10, wherein

    - the Early-Late signal generation unit (202) is configured to generate a PP signal (231) based on the code signal, based on the subcarrier signal (101) and based on the first delay estimate $\tilde{\tau}$;
    - the PP signal (231) is generated based on the code signal (301) delayed by the first delay estimate $\tilde{\tau}$, and the subcarrier signal (302) delayed by the first delay estimate $\tilde{\tau}$; and
    - the system (200) comprises a carrier locked loop (212, 203-3, 204-3, 205, 206, 201) configured to determine the received modulating signal (222) based on the received navigation signal (220) and the PP signal (231).

12. The system (200) of claim 11, wherein the carrier locked loop (212, 203-3, 204-3, 205, 206, 201) comprises

    - a carrier correlation unit (203-3, 204-3) configured to determine a carrier correlation at a center gate, based on the received modulating signal (222) and based on the PP signal (231);
    - a phase detector unit (205, 206) configured to determine an estimate of a phase of the carrier signal based on the carrier correlation at the center gate; and
    - the carrier compensation unit (201, 212) configured to determine the received modulating signal (222) based on the received navigation signal (220) and based on the estimate of the phase of the carrier signal.

13. The system (200) of any previous claim, wherein the Early-Late signal generation unit (202) comprises a numerically controlled oscillator.

14. The system (200) of any previous claim, wherein

    - the subcarrier signal is generated by combining a plurality of constituent subcarrier signals at different subcarrier rates and at different power levels;
    - the Early-Late signal generation unit (202) is configured to determine the EP signal (232), the LP signal (233), the PE signal (235) and the PL signal (234) based on the constituent subcarrier signal having the highest power level among the plurality of constituent subcarrier signals.

15. A method (400) for determining a delay estimate $\hat{\tau}$ of a delay incurred by a navigation signal (220), wherein the navigation signal (220) is indicative of a carrier signal modulated with a code signal and modulated with a subcarrier signal (101); the method (400) comprising

    - generating (401) an EP signal (232) based on the code signal (303) delayed by a first delay estimate $\tilde{\tau}$, and based on the subcarrier signal (304) delayed by the first delay estimate $\tilde{\tau}$ and advanced by a first subcarrier separation time;
    - generating (402) a LP signal (233) based on the code signal (303) delayed by the first delay estimate $\tilde{\tau}$, and based on the subcarrier signal delayed by the first delay estimate $\tilde{\tau}$ and delayed by a second subcarrier separation time;
    - generating (403) a PE signal (235) based on the code signal (305) delayed by the first delay estimate $\tilde{\tau}$ and advanced by a first code separation time, and based on the subcarrier signal (306) delayed by the first delay estimate $\tilde{\tau}$;
    - generating (404) a PL signal (234) based on the code signal delayed by the first delay estimate $\tilde{\tau}$ and delayed

by a second code separation time, and based on the subcarrier signal (306) delayed by the first delay estimate $\tilde{\tau}$;
- determining (405) the first delay estimate $\tilde{\tau}$ based on the received navigation signal (220), the EP signal (232) and the LP signal (233);
- determining (406) a delay offset based on the received navigation signal (220), the PE signal (235) and the PL signal (234); and
- determining (407) the delay estimate $\hat{\tau}$ based on the first delay estimate $\tilde{\tau}$ and based on the delay offset.

**Patentansprüche**

1. System (200), das konfiguriert ist zum Bestimmen einer Verzögerungsschätzung $\hat{\tau}$ einer Übertragungsverzögerung, die durch ein an dem System (200) empfangenen Navigationssignal (220) anfällt, wobei das Navigationssignal (220) kennzeichnend für ein mit einem Codesignal und einem Unterträgersignal (101) moduliertes Trägersignal ist; wobei das System (200)

   - eine Früh-Spät-Signalerzeugungseinheit (202), die konfiguriert ist zum Erzeugen eines EP Signals (232), eines LP Signals (233), eines PE Signals (235) und eines PL Signals (234) basierend auf dem Codesignal, basierend auf dem Unterträgersignal (101) und basierend auf einer ersten Verzögerungsschätzung $\tilde{\tau}$; wobei

      - das EP Signal (232) basierend auf dem durch die erste Verzögerungsschätzung $\tilde{\tau}$ verzögerten Codesignal (303), und dem durch die erste Verzögerungsschätzung $\tilde{\tau}$ verzögerten und durch eine erste Unterträgerseparationszeit vorgeschobenen Unterträgersignal (304) erzeugt wird;
      - das LP Signal (233) basierend auf dem durch die erste Verzögerungsschätzung $\tilde{\tau}$ verzögerten Codesignal (303), und dem durch die erste Verzögerungsschätzung $\tilde{\tau}$ verzögerten und durch eine zweite Unterträgerseparationszeit verzögerten Unterträgersignal erzeugt wird;
      - das PE Signal (235) basierend auf dem durch die erste Verzögerungsschätzung $\tilde{\tau}$ verzögerten und durch eine erste Codeseparationszeit vorgeschobenen Codesignal (305), und dem durch die erste Verzögerungsschätzung $\tilde{\tau}$ verzögerten Unterträgersignal (306) erzeugt wird; und
      - das PL Signal (234) basierend auf dem durch die erste Verzögerungsschätzung $\tilde{\tau}$ verzögerten und durch eine zweite Codeseparationszeit verzögerten Codesignal, und dem durch die erste Verzögerungsschätzung $\tilde{\tau}$ verzögerten Unterträgersignal (306) erzeugt wird;

   - einen Verzögerungsregelkreis (202, 203-4, 203-5, 204-4, 204-5, 207, 208), der konfiguriert ist zum Bestimmen der ersten Verzögerungsschätzung $\tilde{\tau}$ basierend auf dem empfangenen Navigationssignal (220), dem EP Signal (232) und dem LP Signal (233); und
   - eine Erfassungsweglänge (202, 203-1, 203-2, 204-1, 204-2, 209, 210, 211) umfasst, die konfiguriert ist zum Bestimmen eines Verzögerungsoffsets basierend auf dem empfangenen Navigationssignal (220), dem PE Signal (235) und dem PL Signal (234);

   wobei das System (200) konfiguriert ist zum Bestimmen der Verzögerungsschätzung $\hat{\tau}$ basierend auf der ersten Verzögerungsschätzung $\tilde{\tau}$ und basierend auf dem Verzögerungsoffset.

2. System (200) nach Anspruch 1, wobei das EP Signal (232), das LP Signal (233), das PE Signal (235) und das PL Signal (234) durch Modulieren eines verzögerten und/oder vorgeschobenen Codesignals mit einem verzögerten und/oder vorgeschobenen Unterträgersignal erzeugt werden.

3. System (200) nach einem der vorangegangenen Ansprüche, wobei

   - das System (200) eine Trägerkompensationseinheit (201, 202) umfasst, die konfiguriert ist zum Bestimmen eines empfangenen Modulationssignals (222) basierend auf dem empfangenen Navigationssignal (220); und
   - das empfangene Modulationssignal (222) kennzeichnend für das Codesignal und das Unterträgersignal (101) ist, die in dem empfangenen Navigationssignal (220) umfasst sind.

4. System (200) nach Anspruch 3, wobei der Verzögerungsregelkreis (202, 203-4, 203-5, 204-4, 204-5, 207, 208)

   - eine Früh-Unterträgerkorrelationseinheit (203-4, 204-4), die konfiguriert ist zum Bestimmen einer frühen Unterträgerkorrelation an einem frühen Unterträgertor, basierend auf dem empfangenen modulierten Signal (222) und basierend auf dem EP Signal (232);

- eine Spät-Unterträgerkorrelationseinheit (203-5, 204-5), die konfiguriert ist zum Bestimmen einer späten Unterträgerkorrelation an einem späten Unterträgertor, basierend auf dem empfangenen Modulationssignal (222) und basierend auf dem LP Signal (233); und
- eine Unterträger-Früh-Spät-Unterscheidungseinheit (207) umfasst, die konfiguriert ist zum Bestimmen der ersten Verzögerungsschätzung $\tilde{\tau}$ basierend auf der frühen Unterträgerkorrelation an dem frühen Unterträgertor, der späten Unterträgerkorrelation an dem späten Unterträgertor, und basierend auf einer vorbestimmten Autokorrelationsfunktion (103) des Unterträgersignals (101).

5. System (200) nach Anspruch 3 oder 4, wobei die Erfassungsweglänge (202, 203-1, 203-2, 204-1, 204-2, 209, 210, 211)

- eine Früh-Codekorrelationseinheit (203-1, 204-1), die konfiguriert ist zum Bestimmen einer frühen Codekorrelation an einem frühen Codetor, basierend auf dem empfangenen Modulationssignal (222) und basierend auf dem PE Signal (235);
- eine Spät-Codekorrelationseinheit (203-2, 204-2), die konfiguriert ist zum Bestimmen einer späten Codekorrelation an einem späten Codetor, basierend auf dem empfangenen Modulationssignal (222) und basierend auf dem PL Signal (234);

    - eine Code-Früh-Spät-Unterscheidungseinheit (209), die konfiguriert ist zum Bestimmen eines Erfassungssignals (223) basierend auf der frühen Codekorrelation an dem frühen Codetor, der späten Codekorrelation an dem späten Codetor, und basierend auf einer vorbestimmten Autokorrelationsfunktion (123) des Codesignals; und

    - eine Erfassungseinheit (211) umfasst, die konfiguriert ist zum Bestimmen des Verzögerungsoffsets basierend auf dem Erfassungssignal (223).

6. System (200) nach Anspruch 5, wobei die Erfassungseinheit (211) konfiguriert ist zum Bestimmen des Verzögerungsoffsets basierend auf einem Mittelwert des Erfassungssignals (223).

7. System (200) nach einem der vorangegangenen Ansprüche, wobei die Früh-Spät-Signalerzeugungseinheit (202) konfiguriert ist zum

    - Empfangen des Verzögerungsoffsets von der Erfassungsweglänge (202, 203-1, 203-2, 204-1, 204-2, 209, 210, 211);
    - Ausgleichen der ersten Verzögerungsschätzung $\tilde{\tau}$ durch den Verzögerungsoffset; und
    - Erzeugen des EP Signals (232), des LP Signals (233), des PE Signals (235) und des PL Signals (234) basierend auf der ausgeglichenen ersten Verzögerungsschätzung $\tilde{\tau}$.

8. System (200) nach einem der vorangegangenen Ansprüche, wobei

    - das Codesignal eine Coderate $f_C$ und eine Symboldauer $T_C = 1/f_C$ aufweist; und
    - das Unterträgersignal eine Unterträgerrate $f_S$ und eine Symboldauer $T_S = 1/2f_S$ aufweist.

9. System (200) nach Anspruch 8, wobei der Verzögerungsoffset einer Vielzahl der Symboldauer $T_S$ des Unterträgersignals entspricht.

10. System (200) nach Anspruch 8 oder 9, wobei

    - die Summe der ersten und zweiten Codeseparationszeiten kleiner als $T_C$ ist;
    - die Summe der ersten und zweiten Unterträgerseparationszeiten kleiner als $T_S$ ist;
    - die ersten und zweiten Unterträgerseparationszeiten gleich sind; und/oder
    - die ersten und zweiten Codeseparationszeiten gleich sind.

11. System (200) nach einem der Ansprüche 3 bis 10, wobei

    - die Früh-Spät-Signalerzeugungseinheit (202) konfiguriert ist zum Erzeugen eines PP Signals (231) basierend auf dem Codesignal, basierend auf dem Unterträgersignal (101) und basierend auf der ersten Verzögerungsschätzunge;

- das PP Signal (231) basierend auf dem durch die erste Verzögerungsschätzung $\tilde{\tau}$ verzögerten Codesignal (301), und dem durch die erste Verzögerungsschätzung $\tilde{\tau}$ verzögerten Unterträgersignal (302) erzeugt wird; und
- das System (200) einen Trägerregelkreis (212, 203-3, 204-3, 205, 206, 201) umfasst, der konfiguriert ist zum Bestimmen des empfangenen Modulationssignals (222) basierend auf dem empfangenen Navigationssignal (220) und dem PP Signal (231).

12. System (200) nach Anspruch 11, wobei der Trägerregelkreis (212, 203-3, 204-3, 205, 206, 201)

- eine Trägerkorrelationseinheit (203-3, 204-3), die konfiguriert ist zum Bestimmen einer Trägerkorrelation an einem Schwerpunktstor, basierend auf dem empfangenen modulierten Signal (222) und basierend auf dem PP Signal (231);
- eine Phasenerfassungseinheit (205, 206), die konfiguriert ist zum Bestimmen einer Phasenschätzung des Trägersignals basierend auf der Trägerkorrelation an dem Schwerpunktstor; und
- die Trägerkompensationseinheit (201, 212) umfasst, die konfiguriert ist zum Bestimmen des empfangenen Modulationssignals (222) basierend auf dem empfangenen Navigationssignal (220) und basierend auf der Phasenschätzung des Trägersignals.

13. System (200) nach einem der vorangegangenen Ansprüche, wobei die Früh-Spät-Signalerzeugungseinheit (202) einen numerisch gesteuerten Oszillator umfasst.

14. System (200) nach einem der vorangegangenen Ansprüche, wobei

- das Unterträgersignal durch Kombinieren einer Vielzahl von konstituierenden Unterträgersignalen bei verschiedenen Unterträgerraten und bei verschiedenen Leistungspegeln erzeugt wird;
- die Früh-Spät-Signalerzeugungseinheit (202) konfiguriert ist zum Bestimmen des EP Signals (232), des LP Signals (233), des PE Signals (235) und des PL Signals (234) basierend auf dem konstituierenden Unterträgersignal, das den höchsten Leistungspegel unter der Vielzahl von konstituierenden Unterträgersignalen aufweist.

15. Verfahren (400) zum Bestimmen einer Verzögerungsschätzung $\hat{\tau}$ einer durch ein Navigationssignal (220) anfallenden Verzögerung, wobei das Navigationssignal (220) kennzeichnend für ein mit einem Codesignal und einem Unterträgersignal (101) moduliertes Trägersignal ist; das Verfahren (400) umfassend

- Erzeugen (401) eines EP Signals (232) basierend auf dem durch eine erste Verzögerungsschätzung $\tilde{\tau}$ verzögerten Codesignal (303), und basierend auf dem durch die erste Verzögerungsschätzung $\tilde{\tau}$ verzögerten und durch eine erste Unterträgerseparationszeit vorgeschobenen Unterträgersignal (304);
- Erzeugen (402) eines LP Signals (233) basierend auf dem durch die erste Verzögerungsschätzung $\tilde{\tau}$ verzögerten Codesignal (303), und basierend auf dem durch die erste Verzögerungsschätzung $\tilde{\tau}$ verzögerten und durch eine zweite Unterträgerseparationszeit verzögerten Unterträgersignal;
- Erzeugen (403) eines PE Signals (235) basierend auf dem durch die erste Verzögerungsschätzung $\tilde{\tau}$ verzögerten und durch eine erste Codeseparationszeit vorgeschobenen Codesignal (305), und basierend auf dem durch die erste Verzögerungsschätzung $\tilde{\tau}$ verzögerten Unterträgersignal (306);
- Erzeugen (404) eines PL Signals (234) basierend auf dem durch die erste Verzögerungsschätzung $\tilde{\tau}$ verzögerten und durch eine zweite Codeseparationszeit verzögerten Codesignal, und basierend auf dem durch die erste Verzögerungsschätzung $\tilde{\tau}$ verzögerten Unterträgersignal (306);
- Bestimmen (405) der ersten Verzögerungsschätzung $\tilde{\tau}$ basierend auf dem empfangenen Navigationssignal (220), dem EP Signal (232) und dem LP Signal (233);
- Bestimmen (406) eines Verzögerungsoffsets basierend auf dem empfangenen Navigationssignal (220), dem PE Signal (235) und dem PL Signal (234); und
- Bestimmen (407) der Verzögerungsschätzung $\tilde{\tau}$ basierend auf der ersten Verzögerungsschätzung $\tilde{\tau}$ und basierend auf dem Verzögerungsoffset.

## Revendications

1. Système (200) configuré pour déterminer une estimation de retard $\tilde{\tau}$ d'un retard de transmission encouru par un signal de navigation (220) reçu au niveau du système (200),
   dans lequel le signal de navigation (220) indique un signal de porteuse modulé avec un signal de code et modulé avec un signal de sous-porteuse (101) ; dans lequel le système (200) comprend :

- une unité de génération de signal précoce-tardif (202) configurée pour générer un signal EP (232), un signal LP (233), un signal PE (235) et un signal PL (234) sur la base du signal de code, sur la base du signal de sous-porteuse (101) et sur la base d'une première estimation de retard $\tilde{\tau}$ ; dans lequel :

- le signal EP (232) est généré sur la base du signal de code (303) retardé par la première estimation de retard $\tilde{\tau}$, et le signal de sous-porteuse (304) retardé par la première estimation de retard $\tilde{\tau}$ et avancé par un premier temps de séparation de sous-porteuse ;
- le signal LP (233) est généré sur la base du signal de code (303) retardé par la première estimation de retard $\tilde{\tau}$, et le signal de sous-porteuse retardé par la première estimation de retard $\tilde{\tau}$ et retardé par un second temps de séparation de sous-porteuse ;
- le signal PE (235) est généré sur la base du signal de code (305) retardé par la première estimation de retard $\tilde{\tau}$ et avancé par un premier temps de séparation de code, et le signal de sous-porteuse (306) retardé par la première estimation de retard $\tilde{\tau}$ ; et
- le signal PL (234) est généré sur la base du signal de code retardé par la première estimation de retard $\tilde{\tau}$ et retardé par un second temps de séparation de code, et le signal de sous-porteuse (306) retardé par la première estimation de retard $\tilde{\tau}$ ;

- une boucle à verrouillage de retard (202, 203-4, 203-5, 204-4, 204-5, 207, 208) configurée pour déterminer la première estimation de retard $\tilde{\tau}$ sur la base du signal de navigation reçu (220), du signal EP (232) et du signal LP (233) ; et
- un trajet de détection (202, 203-1, 203-2, 204-1, 204-2, 209, 210, 211) configuré pour déterminer un décalage de retard sur la base du signal de navigation reçu (220), du signal PE (235) et du signal PL (234) ;

dans lequel le système (200) est configuré pour déterminer l'estimation de retard $\tilde{\tau}$ sur la base de la première estimation de retard $\tilde{\tau}$ et sur la base du décalage de retard.

2. Système (200) selon la revendication 1, dans lequel le signal EP (232), le signal LP (233), le signal PE (235) et le signal PL (234) sont générés en modulant un signal de code avancé et/ou retardé avec un signal de sous-porteuse avancé et/ou retardé.

3. Système (200) selon l'une quelconque des revendications précédentes, dans lequel :

- le système (200) comprend une unité de compensation de porteuse (201, 202) configurée pour déterminer un signal de modulation reçu (222) sur la base du signal de navigation reçu (220) ; et
- le signal de modulation reçu (222) indique le signal de code et le signal de sous-porteuse (101) compris dans le signal de navigation reçu (220).

4. Système (200) selon la revendication 3, dans lequel la boucle à verrouillage de retard (202, 203-4, 203-5, 204-4, 204-5, 207, 208) comprend :

- une unité de corrélation de sous-porteuse précoce (203-4, 204-4) configurée pour déterminer une corrélation de sous-porteuse précoce au niveau d'une grille de sous-porteuse précoce, sur la base du signal de modulation reçu (222) et sur la base du signal EP (232) ;
- une unité de corrélation de sous-porteuse tardive (203-5, 204-5) configurée pour déterminer une corrélation de sous-porteuse tardive au niveau d'une grille de sous-porteuse tardive, sur la base du signal de modulation reçu (222) et sur la base du signal LP (233) ; et
- une unité de discrimination précoce-tardive de sous-porteuse (207) configurée pour déterminer la première estimation de retard $\tilde{\tau}$ sur la base de la corrélation de sous-porteuse précoce au niveau de la grille de sous-porteuse précoce, la corrélation de sous-porteuse tardive au niveau de la grille de sous-porteuse tardive, et sur la base d'une fonction d'autocorrélation prédéterminée (103) du signal de sous-porteuse (101).

5. Système (200) selon l'une quelconque des revendications 3 à 4, dans lequel le trajet de détection (202, 203-1, 203-2, 204-1, 204-2, 209, 210, 211) comprend :

- une unité de corrélation de code précoce (203-1, 204-1) configurée pour déterminer une corrélation de code précoce au niveau d'une grille de code précoce, sur la base du signal de modulation reçu (222) et sur la base du signal PE (235) ;
- une unité de corrélation de code tardif (203-2, 204-2) configurée pour déterminer une corrélation de code tardif au niveau d'une grille de code tardif, sur la base du signal de modulation reçu (222) et sur la base du signal PL (234) ;
- une unité de discrimination précoce-tardive de code (209) configurée pour déterminer un signal de détection (223) sur la base de la corrélation de code précoce au niveau de la grille de code précoce, de la corrélation de code tardif au niveau de la grille de code tardif, et sur la base d'une fonction d'autocorrélation prédéterminée (123) du signal de code ; et
- une unité de détection (211) configurée pour déterminer le décalage de retard sur la base du signal de détection (223).

6. Système (200) selon la revendication 5, dans lequel l'unité de détection (211) est configurée pour déterminer le décalage de retard sur la base d'une valeur moyenne du signal de détection (223).

7. Système (200) selon l'une quelconque des revendications précédentes, dans lequel l'unité de génération de signal précoce-tardif (202) est configurée pour :

- recevoir le décalage de retard en provenance du trajet de détection (202, 203-1, 203-2, 204-1, 204-2, 209, 210, 211) ;
- décaler la première estimation de retard $\tilde{\tau}$ par le décalage de retard ; et
- générer le signal EP (232), le signal LP (233), le signal PE (235) et le signal PL (234) sur la base de la première estimation de retard $\tilde{\tau}$ de décalage.

8. Système (200) selon l'une quelconque des revendications précédentes, dans lequel :

- le signal de code présente un taux de code $f_C$ et une durée de symbole $T_C = 1/f_C$; et
- le signal de sous-porteuse présente un taux de sous-porteuse $f_S$ et une durée de symbole $T_S = 1/2f_S$.

9. Système (200) selon la revendication 8, dans lequel le décalage de retard correspond à un multiple de la durée de symbole $T_S$ du signal de sous-porteuse.

10. Système (200) selon l'une quelconque des revendications 8 à 9, dans lequel :

- la somme des premier et second temps de séparation de code est inférieure à $T_C$;
- la somme des premier et second temps de séparation de sous-porteuse est inférieure à $T_S$ ;
- les premier et second temps de séparation de sous-porteuse sont égaux ; et/ou
- les premier et second temps de séparation de code sont égaux.

11. Système (200) selon l'une quelconque des revendications 3 à 10, dans lequel :

- l'unité de génération de signal précoce-tardif (202) est configurée pour générer un signal PP (231) sur la base du signal de code, sur la base du signal de sous-porteuse (101) et sur la base de la première estimation de retard $\tilde{\tau}$ ;
- le signal PP (231) est généré sur la base du signal de code (301) retardé par la première estimation de retard $\tilde{\tau}$, et le signal de sous-porteuse (302) retardé par la première estimation de retard $\tilde{\tau}$ ; et
- le système (200) comprend une boucle à verrouillage de porteuse (212, 203-3, 204-3, 205, 206, 201) configurée pour déterminer le signal de modulation reçu (222) sur la base du signal de navigation reçu (220) et du signal PP (231).

12. Système (200) selon la revendication 11, dans lequel la boucle à verrouillage de porteuse (212, 203-3, 204-3, 205, 206, 201) comprend :

- une unité de corrélation de porteuse (203-3, 204-3) configurée pour déterminer une corrélation de porteuse au niveau d'une grille centrale, sur la base du signal de modulation reçu (222) et sur la base du signal PP (231) ;
- une unité de détecteur de phase (205, 206) configurée pour déterminer une estimation d'une phase du signal de porteuse sur la base de la corrélation de porteuse au niveau de la grille centrale ; et
- l'unité de compensation de porteuse (201, 212) configurée pour déterminer le signal de modulation reçu (222) sur la base du signal de navigation reçu (220) et sur la base de l'estimation de la phase du signal de porteuse.

**13.** Système (200) selon l'une quelconque des revendications précédentes, dans lequel l'unité de génération de signal précoce-tardif (202) comprend un oscillateur commandé numériquement.

**14.** Système (200) selon l'une quelconque des revendications précédentes, dans lequel :

- le signal de sous-porteuse est généré par la combinaison d'une pluralité de signaux de sous-porteuses constitutifs à différentes vitesses de sous-porteuses et à différents niveaux de puissance ;
- l'unité de génération de signal précoce-tardif (202) est configurée pour déterminer le signal EP (232), le signal LP (233), le signal PE (235) et le signal PL (234) sur la base du signal de sous-porteuse constitutif ayant le niveau de puissance le plus élevé parmi la pluralité de signaux de sous-porteuses constitutifs.

**15.** Procédé (400) permettant de déterminer une estimation de retard $\hat{\tau}$ d'un retard encouru par un signal de navigation (220), dans lequel le signal de navigation (220) indique un signal de porteuse modulé avec un signal de code et modulé avec un signal de sous-porteuse (101) ; le procédé (400) comprenant :

- la génération (401) d'un signal EP (232) sur la base du signal de code (303) retardé par une première estimation de retard $\tilde{\tau}$, et sur la base du signal de sous-porteuse (304) retardé par la première estimation de retard $\tilde{\tau}$ et avancé par un premier temps de séparation de sous-porteuse ;
- la génération (402) d'un signal LP (233) sur la base du signal de code (303) retardé par la première estimation de retard $\tilde{\tau}$, et sur la base du signal de sous-porteuse retardé par la première estimation de retard $\tilde{\tau}$ et retardé par un second temps de séparation de sous-porteuse ;
- la génération (403) d'un signal PE (235) sur la base du signal de code (305) retardé par la première estimation de retard $\tilde{\tau}$ et avancé par un premier temps de séparation de code, et sur la base du signal de sous-porteuse (306) retardé par la première estimation de retard $\tilde{\tau}$ ;
- la génération (404) d'un signal PL (234) sur la base du signal de code retardé par la première estimation de retard $\tilde{\tau}$ et retardé par un second temps de séparation de code, et sur la base du signal de sous-porteuse (306) retardé par la première estimation de retard $\tilde{\tau}$ ;
- la détermination (405) de la première estimation de retard $\tilde{\tau}$ sur la base du signal de navigation reçu (220), du signal EP (232) et du signal LP (233) ;
- la détermination (406) d'un décalage de retard sur la base du signal de navigation reçu (220), du signal PE (235) et du signal PL (234) ; et
- la détermination (407) de l'estimation de retard $\tilde{\tau}$ sur la base de la première estimation de retard $\tilde{\tau}$ et sur la base du décalage de retard.

Fig. 1a

**Fig. 1b**

Fig. 2

**Fig. 3**

400

401

402

403

404

405

406

407

**Fig. 4**

**EP 2 796 896 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010104046 A1